# FASCICULE DE BREVET EUROPEEN

(11) **EP 2 826 125 B1**
(45) Date de publication et mention de la délivrance du brevet: **23.05.2018**
(21) Numéro de dépôt: 13715300.3
(22) Date de dépôt: 12.03.2013
(51) Int. Cl.: B60L 11/18, H02J 50/12, H02J 5/00, H02M 3/335, H02J 7/02, H02M 1/00, H02M 3/337

(54) **DISPOSITIF DE RECHARGE SANS CONTACT POUR BATTERIE DE VEHICULE AUTOMOBILE ET PROCEDE DE COMMANDE ASSOCIE**
VORRICHTUNG ZUR KONTAKTLOSEN LADUNG EINER KRAFTFAHRZEUGBATTERIE, UND ZUGEHÖRIGES STEUERVERFAHREN
DEVICE FOR CONTACTLESSLY RECHARGING A MOTOR VEHICLE BATTERY, AND ASSOCIATED CONTROL METHOD

(30) Priorité: 14.03.2012 FR 1252283
(43) Date de publication de la demande: 21.01.2015
(73) Titulaire: Renault S.A.S., 92100 Boulogne-Billancourt (FR)
(72) Inventeur: CREGUT, Samuel, F-78470 Saint-Remy-les-Chevreuse (FR); LOUDOT, Serge, F-91190 Villiers Le Bacle (FR)
(86) Numéro de dépôt international: PCT/FR2013/050511
(87) Numéro de publication internationale: WO 2013/136004

(56) Documents cités:
- EP-A1- 0 715 389
- EP-A1- 2 209 180
- EP-A1- 2 317 624
- FR-A1- 2 947 113
- JP-A- 2012 210 116
- US-A- 5 654 621
- US-A1- 2002 054 498
- US-A1- 2011 193 416
- RAFAL M MISKIEWICZ ET AL: "Contactless battery charger with bi-directional energy transfer for plug-in vehicles with vehicle-to-grid capability", INDUSTRIAL ELECTRONICS (ISIE), 2011 IEEE INTERNATIONAL SYMPOSIUM ON, IEEE, 27 juin 2011 (2011-06-27), pages 1969-1973, XP032019341, DOI: 10.1109/ISIE.2011.5984460 ISBN: 978-1-4244-9310-4
- COVIC G A ET AL: "Design Considerations for a Contactless Electric Vehicle Battery Charger", IEEE TRANSACTIONS ON INDUSTRIAL ELECTRONICS, IEEE SERVICE CENTER, PISCATAWAY, NJ, USA, vol. 52, no. 5, 1 octobre 2005 (2005-10-01), pages 1308-1314, XP011139887, ISSN: 0278-0046, DOI: 10.1109/TIE.2005.855672

## Description

L'invention a pour domaine technique la recharge des batteries de véhicules automobiles, et plus particulièrement, la recharge sans contact des batteries de véhicules automobiles.

La recharge des véhicules électriques requiert généralement une liaison filaire associée à des contacts électriques entre le véhicule et sa borne de recharge. En utilisation courante, cette méthode de recharge présente un certain nombre d'inconvénients pour l'utilisateur. La manipulation de câbles est fastidieuse voir difficile de par un manque d'ergonomie (masse, effort d'insertion, etc...) des câbles et de leur connexion.

Certains utilisateurs sont réfractaires à l'utilisation d'un tel système de par la présence de contacts électriques associés à la présence supposée de hautes tensions synonymes d'un risque électrique.

Enfin, le système de recharge filaire fait peser sur l'utilisateur le risque d'avoir un véhicule inutilisable en cas d'oubli de branchement du système de recharge.

A cause de ces inconvénients, il est nécessaire de recourir à une solution alternative, la charge sans contact. La transmission de l'énergie se fait alors par un couplage magnétique entre une bobine primaire fixée au sol et une bobine secondaire située dans le plancher du véhicule et reliée à la batterie du véhicule.

De l'état de la technique, on connait les documents suivants.

La demande de brevet français FR2947113 décrit un convertisseur permettant l'alimentation de la bobine primaire d'un système de recharge sans contact.

Le document EP 0715389 présente la topologie et le principe de transmission d'énergie au travers d'un transformateur pour la charge d'une batterie.

Le document US 5654621 décrit un système de charge sans contact avec un positionnement mécanique de la bobine primaire afin de minimiser les variations d'impédance.

Le document EP 2 317 624 décrit également un contrôle de la puissance basé uniquement sur la variation de fréquence du signal PWM de commande.

Le document US 20110193416 divulgue l'utilisation de la technique ZVS (acronyme anglais pour « Zero Voltage Switching », commutation à tension nulle) dans un système de transmission de puissance par induction. L'article IEEE intitulé "Contactless Battery charger with Bi-directional Energy Transfer for Plug-in Vehicles with Vehicle-to-Grid Capability", Rafal M. Miskiewicz et al., Industrial Electronics (ISIE), 2011, IEEE International Symposium, IEEE, 27 juin 2011, pages 1969-1973, doi:10.1109/ISIE.2011.5984460, ISBN 978-1-4244-9310-4, décrit un dispositif de recharge d'un véhicule électrique ou hybride. Ce dispositif de recharge comprend une partie stationnaire fixée au sol et connectée au réseau d' alimentation électrique, et une partie mobile disposée dans un véhicule, et reliée à la batterie de traction du véhicule. La partie stationnaire comporte un onduleur et un pont de transistors pour découper la tension générée par l'onduleur onduleur afin d' alimenter la bobine primaire d'un transformateur, la bobine secondaire du transformateur étant dans la partie mobile. L' alimentation fournie à la bobine secondaire est effectuée à la fréquence de résonance et utilise la technique de commutation à courant nul. Le transfert d'énergie entre la bobine primaire et la bobine secondaire doit présenter la sensibilité la plus faible possible quant aux écarts de positionnement de la bobine secondaire par rapport à la bobine primaire. D'autre part, un pilotage fin de la puissance envoyée de la bobine primaire à la bobine secondaire est indispensable pour assurer une charge efficace, rapide et non destructive de la batterie.

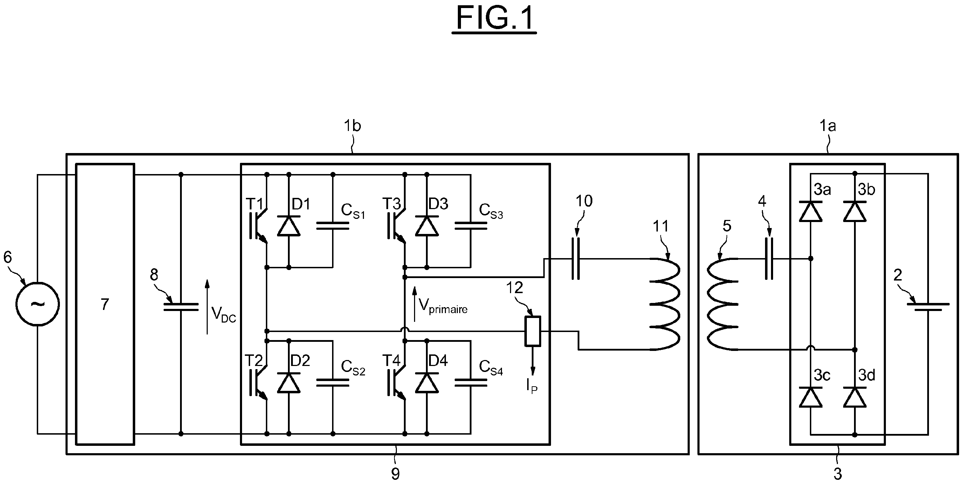

La figure 1 illustre l'état de l'art. On peut voir un enroulement primaire 11 du transformateur qui représente la bobine primaire fixée au sol. Il est alimenté par le réseau domestique via un correcteur de facteur de puissance (acronyme anglais PFC pour Power Factor Corrector, ref. 7 fig. 1) qui redresse la tension fournie par le réseau avec un facteur de forme et un facteur de puissance qui satisfont les critères de connexion au réseau en respectant un gabarit harmonique du courant absorbé sur le réseau et en assurant un facteur de puissance proche de 1 (le courant absorbé est en phase avec la tension du réseau).

La tension continue produite par le correcteur de facteur de puissance est supérieure à la tension que produirait un redresseur à diodes. Cette tension alimente un onduleur monophasé à résonance piloté par un système de commande.

Une spécificité de la recharge sans contact de véhicules électriques est qu'elle doit être robuste vis-à-vis de la variabilité importante de la position entre la bobine secondaire équipant le véhicule et la bobine primaire fixée au sol. En effet, la position de la voiture garée par rapport à la bobine au sol varie fortement d'un stationnement à l'autre. Un des moyens de compenser cette variabilité est d'adapter la fréquence de l'alimentation du primaire à la résonance du circuit primaire-secondaire couplé qui varie en fonction de la position d'une bobine part rapport à l'autre.

Cette variation peut se faire directement par suivi (« tracking » en langue anglaise), c'est-à-dire en recherchant la fréquence d'alimentation de l'enroulement primaire qui permet d'obtenir le courant maximal dans la bobine primaire, le réglage de la puissance se faisant par la tension d'alimentation continue fournie par le correcteur de facteur de puissance (Ref. 7, Fig. 1). Toutefois, cette solution est particulièrement complexe, ce qui implique une difficulté et un coût de mise en oeuvre élevés.

Il existe un besoin pour une solution alternative à ce problème, qui soit conciliable avec un contrôle fin de la puissance et une faible sensibilité au positionnement.

On propose un dispositif de recharge sans contact pour batterie de véhicule selon la revendication 1 etun procédé de commande d'un dispositif de recharge sans contact pour véhicule selon la revendication 5. Des modes particuliers de réalisation sont définis dans les revendications dépendantes. D'autres buts, caractéristiques et avantages apparaîtront à la lecture de la description suivante donnée uniquement en tant qu'exemple non limitatif et faite en référence aux dessins annexés sur lesquels :
- la figure 1 illustre un système de recharge sans contact selon l'art antérieur,
- la figure 2 illustre un système de commande en boucle ouverte,
- la figure 3 illustre un système de commande en boucle ouverte avec correction par une boucle fermée,
- la figure 4 illustre un système de commande en boucle fermée, et
- la figure 5 illustre un système de recharge sans contact à double résonance.

Comme décrit dans la partie introductive, la figure 1 illustre la topologie d'un système de recharge sans contact. Le système de recharge sans contact comprend une partie fixe 1b située par exemple dans le sol et est couplé à une partie mobile la liée par exemple à un véhicule.

La partie fixe 1b est alimentée par le réseau électrique 6 connecté en entrée à un correcteur de facteur de puissance 7 (communément désigné par l'anglicisme PFC pour Power Factor Corrector). Les sorties du correcteur 7 sont connectées à une capacité 8 connectée en parallèle et à un onduleur 9.

L'onduleur 9 présente une structure en H dans laquelle une première entrée est reliée au collecteur d'un premier transistor T1, à la cathode d'une première diode D1, à une armature d'une première capacité d'aide à la commutation à l'ouverture (communément appelée snubber en anglais) Csi, au collecteur d'un troisième transistor T3, à la cathode d'une troisième diode D3 et, à une armature d'une troisième capacité snubber C_{S3}.

La deuxième entrée de l'onduleur est reliée à l'émetteur d'un deuxième transistor T2, à l'anode d'une deuxième diode D2, à l'armature d'une deuxième diode snubber C_{S2}, à l'émetteur d'un quatrième transistor T4, à l'anode d'une quatrième diode D4 et à l'armature d'une quatrième diode snubber C_{S4}.

L'émetteur du premier transistor T1, l'anode de la première diode D1, l'autre armature de la première diode snubber Cs₂, sont reliés à une première sortie de l'onduleur et au collecteur du deuxième transistor T2, à la cathode de la deuxième diode D2 et à l'autre armature de la deuxième diode snubber Cs₂.

L'émetteur du troisième transistor T3, l'anode de la troisième diode D3, l'autre armature de la troisième diode snubber Cs₃ sont reliés à une deuxième sortie de l'onduleur et au collecteur du quatrième transistor T4, à la cathode de la quatrième diode D4 et à l'autre armature de la quatrième diode snubber Cs₄.

Un capteur de courant 12, par exemple un shunt, est connecté en sortie de l'une ou l'autre des sorties de l'onduleur, de préférence, la première sortie. Une extrémité de l'enroulement primaire 11 est reliée au capteur de courant 12, l'autre extrémité étant reliée à une armature d'une première capacité 10, l'autre armature de la première capacité 10 étant connectée à l'autre sortie de l'onduleur.

La partie mobile la comprend une batterie 2 reliée aux sorties d'un redresseur à diodes 3, une entrée du redresseur étant reliée à une armature d'une capacité 4, l'autre armature étant reliée à une extrémité d'un enroulement secondaire 5, l'autre extrémité étant reliée à l'autre entrée du redresseur. Le redresseur comprend deux bras formé chacun par un pont de diodes.

Une première entrée est connectée entre l'anode d'une première diode 3a et la cathode d'une troisième diode 3c. Une deuxième entrée est connectée entre l'anode d'une deuxième diode 3b et la cathode d'une quatrième diode 3d.

Une première sortie est connectée aux cathodes de la première diode et de la deuxième diode. Une deuxième sortie est connectée aux cathodes de la troisième diode et de la quatrième diode.

Les capacités 10,4 mises en série respectivement avec l'enroulement primaire 11 et l'enroulement secondaire 5 du transformateur entrent en résonnance avec les inductances de fuite de l'enroulement primaire 11 et de l'enroulement secondaire 5 respectivement.

L'onduleur 9 alimente l'enroulement primaire 11 en pleine onde, c'est-à-dire en tension rectangulaire non modulée et de fréquence identique à celle du courant Ip mesuré par le capteur de courant 12. Le principe général de la commande consiste en ce que l'onduleur 9 fonctionne toujours à une fréquence fondamentale supérieure à la fréquence de résonance du circuit résonant formé par la première capacité 10 et l'inductance de fuite de l'enroulement primaire 11. Ce pilotage est couramment appelé pilotage ZVS (acronyme anglais pour Zéro Voltage Switching, commutation à tension nulle) ou parfois pilotage hyper-résonant ou même pilotage à thyristor dual.

L'enroulement secondaire 5 et la capacité 4 sont reliés à un pont de diode permettant de générer une tension continue de recharge de la batterie 2.

L'avantage principal réside dans le fait que les pertes par commutation des transistors (T1, T2, T3, T4) sont quasi-nulles et permet donc de travailler à des fréquences élevées (de l'ordre de quelques dizaines de kilohertz) avec un bon rendement.

On rend conducteur chaque transistor dès que la tension à ses bornes (tension Vce entre collecteur et émetteur de chaque transistor bipolaire à grille isolée IGBT) s'annule. En pratique, le transistor est amorcé lorsque la tension Vce passe en dessous d'un seuil défini.

La commutation est sans pertes car réalisée à tension Vce nulle. L'instant de blocage est défini par la commande, mais cette commutation se fait à pertes réduites grâce à la présence d'une capacité Cs, dite capacité snubber (ou capacité d'aide à la commutation), en parallèle de chaque transistor. Une capacité snubber permet de limiter très fortement la croissance de la tension vue par le composant et donc l'énergie qu'il dissipe dans cette phase.

La variable de commande des transistors est la durée de conduction des transistors, notée Tt. La puissance transmise à l'enroulement secondaire 5 croit avec cette variable.

Lorsque l'impédance du système de recharge sans contact est très faible, notamment aux alentours de la fréquence propre, le pilotage par durée de conduction des transistors Tt est nécessaire pour avoir un pilotage robuste de la puissance lors de fortes charges.

Dans le cas de fortes charges, un fort courant est présent au niveau de l'enroulement primaire 11. La variation de l'impédance du circuit résonant en fonction de la fréquence est forte alors que les temps de conduction des transistors sont assez longs. Comme décrit plus haut, la puissance transférée entre l'enroulement primaire 11 et l'enroulement secondaire 5 présente une forte sensibilité au temps de conduction Tt.

En revanche, pour piloter de faibles puissances, notamment en fin de charge, il est avantageux de piloter directement la fréquence. En effet, dans cette configuration la variation de l'impédance du circuit résonant en fonction de la fréquence est faible, alors que les temps de conduction des transistors deviennent de plus en plus faibles et donc difficiles à gérer. D'autre part, dans cet état, la fréquence est suffisamment élevée pour ne pas risquer de passer en dessous de la fréquence de résonance.

Afin de commander le système de recharge de façon optimale, on passe ainsi d'une commande de la durée de conduction Tt à une commande en fréquence lorsque le courant requis (ou la durée Tt correspondante) passe en dessous d'un seuil défini. Le correcteur étant à commutation à tension nulle, la fréquence doit toujours être supérieure à la fréquence propre du circuit résonnant.

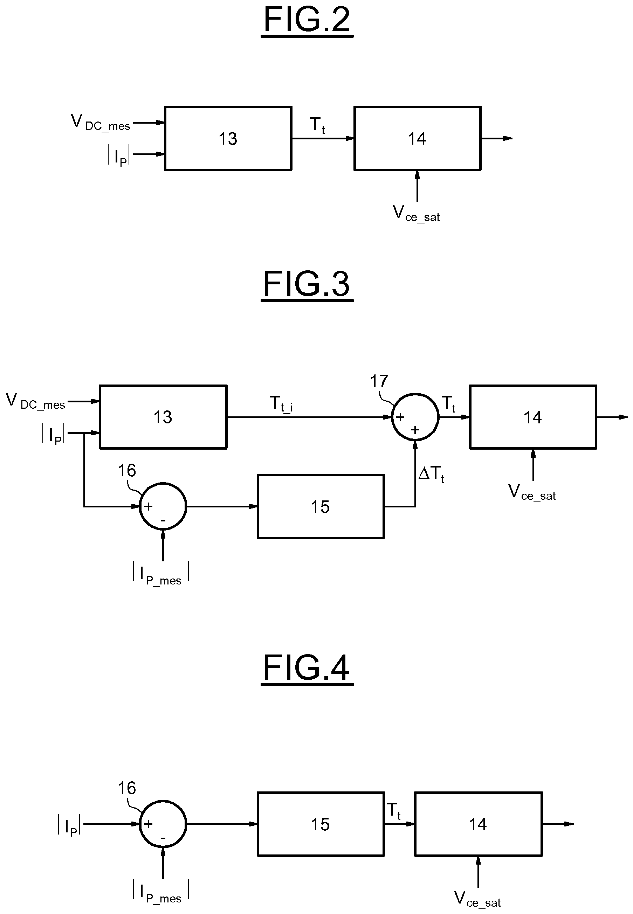

Le système de commande permet un pilotage fin du transfert de puissance avec le moins de pertes possibles. Les figures 2 à 4 illustrent le système de commande dans sa forme adaptée à chaque domaine de fonctionnement décrit ci-dessus. Comme on peut le voir, les différents modes de réalisation comprennent l'association de moyens de détermination d'une durée de conduction et de moyens de commande 14 de l'onduleur en fonction de la durée de conduction. Chacune des figures 2 à 4 illustre un moyen de détermination différent. Toutefois, l'homme du métier comprendra que les différents moyens de détermination peuvent être combinés.

La figure 2 illustre un système de commande en boucle ouverte. On peut voir une cartographie 13 reliée en sortie à un moyen de commande des transistors 14, apte à émettre un signal de commande de la grille des transistors en fonction du signal reçu de la cartographie 13 et des tensions de saturation des transistors Vce_sat. La tension Vce_sat correspond à la tension résiduelle entre collecteur et émetteur du transistor IGBT lorsque celui-ci est saturé. Cette tension peut être directement mesurée ou déduite à partir du signe du courant Ip et de l'état de la commande des transistors T1 à T4.

La cartographie 13 reçoit en entrée une valeur mesurée de la tension continue V_{DC} aux bornes de la capacité 8 ainsi qu'une consigne de courant de crête |I_{P}|. La cartographie 13 peut être une table interpolée en fonction d'un certain nombre de points expérimentaux. La cartographie 13 émet en sortie une valeur de la durée de conduction Tt des transistors.

Le moyen de commande des transistors émet en sortie un signal de commande de la grille des transistors en fonction de la valeur de la durée de conduction Tt des transistors reçue de la cartographie 13 et des tensions de saturation des transistors Vce_sat.

Ce système et ce procédé de commande sont particulièrement adaptés lorsque les impédances du système de recharge sans contact varient peu. La durée de conduction Tt est directement issue d'une table interpolée.

La figure 3 illustre un système de commande combinant la structure du système de commande en boucle ouverte illustré par la figure 2 et une correction de la variable de commande par une boucle de régulation.

On peut voir une cartographie 13 et un moyen de commande des transistors 14 semblables à ceux illustrés sur la figure 2 et assurant les mêmes fonctions. On peut voir également un moyen de régulation 15 connecté en entrée à la sortie d'un soustracteur 16 et en sortie à une entrée d'un sommateur 17. L'autre entrée du sommateur 17 est reliée à la sortie de la cartographie 13 tandis que la sortie du sommateur 17 est reliée à l'entrée du moyen de commande 14. Le régulateur 15 compense les variations entre la situation réelle et celle modélisée dans la cartographie 13 et utilisée pour la régulation en boucle ouverte.

En considérant de nouveau le soustracteur 16, on peut voir qu'une de ses entrées est reliée à une dérivation, portant une consigne de courant de crête |I_{P}|, d'une des connexions reliées en entrée de la cartographie 13. L'autre entrée est reliée à un capteur de courant portant la référence 12 sur la figure 1 apte à mesurer le courant de crête |_{P_mes}|.

La cartographie 13 détermine une durée interpolée de conduction Tt_i qui est ensuite corrigée par sommation d'une correction ΔTₜ de la durée de conduction issue du moyen de régulation 15.

Le moyen de régulation 15 détermine la correction ΔTₜ de la durée de conduction en fonction de l'écart entre la consigne de courant de crête |I_{P}| et la valeur mesurée |I_{P_mes}|. La correction ΔTₜ de la durée de conduction correspond formellement à une durée de conduction. Toutefois, l'écart entre la consigne de courant de crête et la valeur mesurée étant faible, la durée de conduction déterminée en fonction de cet écart peut être considérée comme une correction à la durée de conduction déterminée avec la cartographie.

La valeur de conduction Tt égale à la somme de la durée interpolée de conduction Tt_i et correction ΔTₜ de la durée de conduction tient ainsi compte des faibles variations d'impédance.

Par ailleurs, comme pour le mode de réalisation illustré par la figure 2, la durée de conduction Tt est suffisamment élevée pour être commandée de façon précise au niveau des transistors. Il est toutefois possible de commander les transistors en fréquence, l'incertitude sur la commande est alors plus importante.

Un tel système est particulièrement adapté lorsque l'impédance du système de recharge sans contact est faiblement variable, la boucle de régulation permettant de compenser la variation d'impédance.

La figure 4 illustre un système de commande en boucle fermée. Un tel système comprend uniquement une boucle de régulation permettant de déterminer la variable d'asservissement. Le moyen de commande des transistors 14 et le moyen de régulation 15 sont semblables à ceux illustrés sur la figure 3 et assurent les mêmes fonctions.

On peut voir le moyen de régulation 15 connecté en entrée à la sortie d'un soustracteur 16 et en sortie à l'entrée du moyen de commande 14.

Une des entrées du soustracteur 16 est reliée à connexion portant une consigne de courant de crête |I_{P}|. L'autre entrée est reliée à un capteur de courant portant la référence 12 sur la figure 1 apte à mesurer le courant de crête |I_{P_mes}|.

Le moyen de régulation 15 détermine la durée de conduction Tt en fonction de l'écart entre la consigne de courant de crête |I_{P}| et la valeur mesurée |I_{P_mes}|. Les fortes variations d'impédance peuvent ainsi être corrigées.

A la différence du mode de réalisation illustré par la figure 3, l'écart entre la consigne de courant de crête et la valeur mesurée est suffisamment important pour considérer la valeur déterminée par le moyen de régulation 15 comme une durée de conduction.

A la différence des modes de réalisations illustrés par les figures 2 et 3, la durée de conduction Tt ne permet pas une commande précise au niveau des transistors. En effet, la durée de conduction Tt est suffisamment faible pour que les écarts et déviations du système créés une variation importante de sa valeur. Afin de conserver une commutation précise, on régule de préférence la commutation des transistors en fréquence. On remarquera toutefois que la fréquence de commutation et la durée de conduction des transistors sont des valeurs dépendantes l'une de l'autre.

Ce système est particulièrement adapté lorsque l'impédance du système de recharge sans contact est fortement variable. Il présente de plus l'avantage d'éviter tout passage en dessous de la fréquence de résonnance potentiellement destructrice pour l'électronique.

De façon plus générale, il apparaît que les différents modes de réalisation illustrés par les figures 2, 3 et 4 permettent une commande des transistors de l'onduleur soit en fréquence, soit en durée de conduction, soit les deux à la fois. En effet, il peut être avantageux d'employer une commande en fréquence dans un domaine fréquentiel et une commande en durée de conduction dans un autre domaine fréquentiel, les deux commandes étant issues du même système de commande.

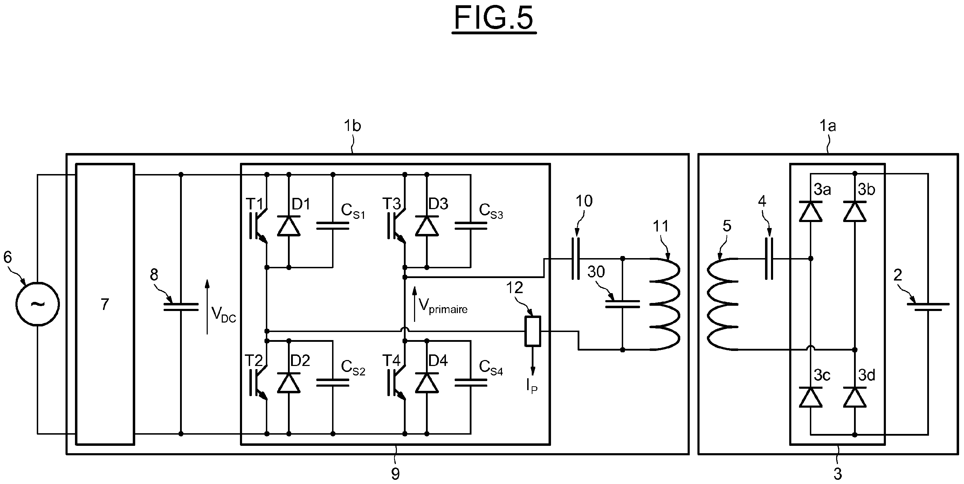

La figure 5 illustre un autre mode de réalisation du système de recharge sans contact illustré par la figure 1, dans lequel une deuxième capacité 30 est reliée en parallèle avec l'enroulement primaire 11. Ce mode de réalisation permet de réduire la plage de fréquence de pilotage pour une variation de puissance transmise importante. Ce mode de réalisation repose sur l'utilisation d'une double résonance grâce à l'ajout de la deuxième capacité 30 qui joue le rôle de circuit bouchon. Il en découle que l'impédance du circuit augmente fortement dès que l'on s'éloigne de la fréquence de résonance du circuit série comprenant la capacité 10 et l'inductance de fuite de l'enroulement 11 ainsi que de la capacité et l'inductance de fuite de l'enroulement 5. Les systèmes de commande illustrés par les figures 2 à 4 sont applicables à un système de recharge sans contact à double résonance.

Le dispositif de recharge sans contact permet ainsi de concilier un contrôle fin de la puissance et une faible sensibilité au positionnement du véhicule par rapport à l'emplacement de recharge.

## Revendications

1. Dispositif de recharge sans contact pour batterie de véhicule automobile, comprenant un système de recharge sans contact comprenant une partie fixe (1b) destinée à être liée au sol munie d'un onduleur et à être reliée à un réseau d'alimentation électrique (6), le dispositif de recharge étant **caractérisé en ce qu'**il comprend un système de commande muni de moyens de détermination d'une durée de conduction (Tt) en fonction de variables électriques de l'onduleur (V_{CE_sat}) et de moyens de commande (14) de l'onduleur en fonction de la durée de conduction, lesdits moyens de détermination comprenant une cartographie (13) de la durée de conduction en fonction d'une tension d'alimentation continue mesurée en entrée de l'onduleur (9) et d'une consigne de courant crête.

2. Dispositif de recharge sans contact selon la revendication 1, dans lequel les moyens de détermination comprennent un moyen de régulation (15) apte à déterminer une correction de la durée de conduction issue de la cartographie (13), la correction étant fonction de l'écart entre une consigne de courant de crête et une mesure du courant de crête en sortie de l'onduleur.

3. Dispositif de recharge sans contact selon l'une quelconque des revendications précédentes, dans lequel les moyens de commande (14) sont aptes à déterminer des signaux de commande en fréquence et/ou en durée de conduction des transistors compris dans l'onduleur (9) en fonction de la durée de conduction reçue des moyens de détermination et de la tension de saturation des transistors.

4. Dispositif de recharge sans contact selon l'une quelconque des revendications précédentes, dans lequel le système de recharge sans contact comprend un circuit résonant connecté en sortie de l'onduleur (9), le circuit résonant comprenant une première capacité (10) connectée en série avec un enroulement primaire (11), et une deuxième capacité (30) connectée aux extrémités de l'enroulement primaire (11) entre la première capacité (10) et l'enroulement primaire (11).

5. Procédé de commande d'un dispositif de recharge sans contact pour batterie de véhicule automobile, le dispositif de recharge comprenant une partie fixe (1b) destinée à être liée au sol munie d'un onduleur et à être reliée à un réseau d'alimentation électrique (6), **caractérisé en ce qu'**il comprend les étapes suivantes
on détermine des variables électriques de l'onduleur,
(V_{CE_sat}) on détermine une durée de conduction (Tt) dans une cartographie en fonction d'une tension d'alimentation continue mesurée en entrée de l'onduleur (9),
et on détermine des signaux de commande de l'onduleur en fonction de la durée de conduction et d'une consigne de courant crête.

6. Procédé de commande selon la revendication 5, dans lequel on détermine une durée de conduction en fonction de l'écart entre une consigne de courant de crête et une mesure du courant de crête en sortie de l'onduleur.

7. Procédé de commande selon l'une quelconque des revendications 5 ou 6, dans lequel on détermine des signaux de commande en fréquence et/ou en durée de conduction des transistors compris dans l'onduleur (9) en fonction de la durée de conduction et de la tension de saturation des transistors.

## Patentansprüche

1. Vorrichtung zur kontaktlosen Ladung für eine Kraftfahrzeugbatterie, welche ein kontaktloses Ladesystem umfasst, das einen feststehenden Teil (1b) umfasst, der dazu bestimmt ist, mit dem Boden verbunden zu werden, mit einem Wechselrichter ausgestattet ist und dazu bestimmt ist, mit einem Stromversorgungsnetz (6) verbunden zu werden, wobei die Ladevorrichtung **dadurch gekennzeichnet ist, dass** sie ein Steuerungssystem umfasst, das mit Mitteln zur Bestimmung einer Leitdauer (Tt) in Abhängigkeit von elektrischen Variablen des Wechselrichters (V_{CE_sat}) und Mitteln zur Steuerung (14) des Wechselrichters in Abhängigkeit von der Leitdauer ausgestattet ist, wobei die Bestimmungsmittel ein Kennfeld (13) der Leitdauer in Abhängigkeit von einer am Eingang des Wechselrichters (9) gemessenen Versorgungsgleichspannung und von einem Spitzenstromsollwert umfassen.

2. Vorrichtung zur kontaktlosen Ladung nach Anspruch 1, wobei die Bestimmungsmittel ein Regelungsmittel (15) umfassen, das in der Lage ist, eine Korrektur der aus dem Kennfeld (13) stammenden Leitdauer zu bestimmen, wobei die Korrektur von der Abweichung zwischen einem Spitzenstromsollwert und einem Messwert des Spitzenstroms am Ausgang des Wechselrichters abhängt.

3. Vorrichtung zur kontaktlosen Ladung nach einem der vorhergehenden Ansprüche, wobei die Steuerungsmittel (14) in der Lage sind, Signale zur Steuerung der Frequenz und/oder der Leitdauer der im Wechselrichter (9) enthaltenen Transistoren in Abhängigkeit von der von den Bestimmungsmitteln empfangenen Leitdauer und von der Sättigungsspannung der Transistoren zu bestimmen.

4. Vorrichtung zur kontaktlosen Ladung nach einem der vorhergehenden Ansprüche, wobei das kontaktlose Ladesystem einen Resonanzkreis umfasst, der mit dem Ausgang des Wechselrichters (9) verbunden ist, wobei der Resonanzkreis einen ersten Kondensator (10), der mit einer Primärwicklung (11) in Reihe geschaltet ist, und einen zweiten Kondensator (30), der mit den Enden der Primärwicklung (11) verbunden ist, zwischen dem ersten Kondensator (10) und der Primärwicklung (11) umfasst.

5. Verfahren zur Steuerung einer Vorrichtung zur kontaktlosen Ladung für eine Kraftfahrzeugbatterie, wobei die Ladevorrichtung einen feststehenden Teil (1b) umfasst, der dazu bestimmt ist, mit dem Boden verbunden zu werden, mit einem Wechselrichter ausgestattet ist und dazu bestimmt ist, mit einem Stromversorgungsnetz (6) verbunden zu werden, **dadurch gekennzeichnet, dass** es die folgenden Schritte umfasst:
es werden elektrische Variable des Wechselrichters (V_{CE_sat}) bestimmt,
es wird eine Leitdauer (Tt) in einem Kennfeld in Abhängigkeit von einer am Eingang des Wechselrichters (9) gemessenen Versorgungsgleichspannung bestimmt,
und es werden Signale zur Steuerung des Wechselrichters in Abhängigkeit von der Leitdauer und von einem Spitzenstromsollwert bestimmt.

6. Verfahren zur Steuerung nach Anspruch 5, wobei eine Leitdauer in Abhängigkeit von der Abweichung zwischen einem Spitzenstromsollwert und einem Messwert des Spitzenstroms am Ausgang des Wechselrichters bestimmt wird.

7. Verfahren zur Steuerung nach einem der Ansprüche 5 oder 6, wobei Signale zur Steuerung der Frequenz und/oder der Leitdauer der im Wechselrichter (9) enthaltenen Transistoren in Abhängigkeit von der Leitdauer und von der Sättigungsspannung der Transistoren bestimmt werden.

## Claims

1. Device for the contactless recharging of a motor vehicle battery, comprising a contactless recharging system comprising a fixed part (1b) intended to be linked to the ground and equipped with an inverter and to be linked to an electric power supply network (6), the recharging device being **characterized in that** it comprises a control system equipped with means for determining a duration of conduction (Tt) on the basis of electrical variables of the inverter (V_{CE_sat}) and with means (14) for controlling the inverter on the basis of the duration of conduction, said determination means comprising a map (13) of the duration of conduction as a function of a DC supply voltage measured at the input of the inverter (9) and of a peak current setpoint.

2. Contactless recharging device according to Claim 1, wherein the determination means comprise a regulating means (15) able to determine a correction of the duration of conduction originating from the map (13), the correction being dependent on the difference between a peak current setpoint and a measurement of the peak current at the output of the inverter.

3. Contactless recharging device according to either one of the preceding claims, wherein the control means (14) are able to determine signals for controlling the transistors contained in the inverter (9) in terms of frequency and/or in terms of duration of conduction on the basis of the duration of conduction received from the determination means and of the saturation voltage of the transistors.

4. Contactless recharging device according to any one of the preceding claims, wherein the contactless recharging system comprises a resonant circuit connected at the output of the inverter (9), the resonant circuit comprising a first capacitor (10) connected in series with a primary winding (11), and a second capacitor (30) connected to the ends of the primary winding (11) between the first capacitor (10) and the primary winding (11).

5. Method for controlling a device for the contactless recharging of a motor vehicle battery, the recharging device comprising a fixed part (1b) intended to be linked to the ground and equipped with an inverter and to be linked to an electric power supply network (6), **characterized in that** it comprises the following steps:
determining electrical variables of the inverter (V_{CE_sat}),
determining a duration of conduction (Tt) in a map as a function of a DC supply voltage measured at the input of the inverter (9),
and determining signals for controlling the inverter on the basis of the duration of conduction and of a peak current setpoint.

6. Control method according to Claim 5, wherein a duration of conduction is determined on the basis of the difference between a peak current setpoint and a measurement of the peak current at the output of the inverter.

7. Control method according to either one of Claims 5 and 6, wherein signals for controlling the transistors contained in the inverter (9) in terms of frequency and/or in terms of duration of conduction are determined on the basis of the duration of conduction and of the saturation voltage of the transistors.
